# EUROPEAN PATENT APPLICATION

(11) **EP 4 303 034 A1**
(43) Date of publication of application: **10.01.2024**
(21) Application number: 22762945.8
(22) Date of filing: 14.02.2022
(51) Int. Cl.: B60B 33/00

(54) **WHEEL LOCK SYSTEM AND CONVEYANCE BODY**

(30) Priority: 01.03.2021 JP 2021031398
(71) Applicant: Asahi Intecc Co., Ltd., Seto-shi, Aichi 489-0071 (JP)
(72) Inventor: YOSHIMOTO, Hideki, London W5 2XP (GB)
(74) Representative: Prinz & Partner mbB
(86) International application number: PCT/JP2022/005650
(87) International publication number: WO 2022/185888

(57) **Abstract**

The present invention prevents a problem of occurrence of a failure in unlocking of a wheel, reduces the force required for locking the wheel, and reduces the time required for locking the wheel. A wheel lock system includes: a body; a shaft member supported by the body so as to be rotatable around a rotation axis and having a recess formed in at least a part of an outer peripheral surface around the rotation axis; a wheel fixed to the shaft member to rotate together with the shaft member; and a lock mechanism that switches between an unlocked state where rotation of the wheel is permitted and a locked state where rotation of the wheel is restricted. The lock mechanism includes a linear body having a protrusion, and the linear body is arranged in the outer peripheral surface formed with the recess of the shaft member, so as to be able to press the protrusion. The lock mechanism is configured to change from the unlocked state, where the protrusion is not fitted into the recess, to the locked state, when the protrusion fits to the recess, along with the movement of the linear body in a direction orthogonal to the rotation axis of the shaft member.

## Description

### TECHNICAL FIELD

The technology disclosed in the present specification relates to wheel lock systems and carriers.

### BACKGROUND ART

To a bottom portion of a suitcase, a caster including a wheel is attached. Various wheel lock systems have been proposed in which rotation of the wheel of the caster can be restricted (locked) in order to prevent unintentional movement of the suit case, or the like. For example, as a wheel lock system, a system is known in which, when a user performs a predetermined operation, a lock pin attached to a distal end of a wire projects in a direction parallel to a rotation axis of a wheel, such that the lock pin is inserted into a lock hole provided in the wheel, and as a result, rotation of the wheel around the rotation axis is restricted (for example, see Patent Literature 1).

### Citation List

### Patent Literature

Patent Literature 1: U.S. Pat. No. 6510927
Patent Literature 2: JP 2012-25331 A
Patent Literature 3: U.S. Pat. No. 8522397

### SUMMARY OF INVENTION

### Technical Problem

In the conventional wheel lock system described above, for example, when a foreign object enters the inside of the lock hole, the lock pin may be fixed to the inside of the lock hole, which may cause a failure in unlocking. In addition, in the conventional wheel lock system described above, movement of the lock pin to the inside of the lock hole is necessary when the wheel is locked, and complete removal of the lock pin from the lock hole is necessary when the wheel is unlocked. Therefore, a moving distance of the lock pin is large, the force required for locking/unlocking of the wheel is large, and the time required for locking/unlocking is long. Such problems are not problems of only wheel lock systems for locking/unlocking of a wheel included in a caster of a suitcase, but also are common problems in wheel lock systems having general wheels as targets.

A technology capable of solving the above problems is disclosed herein.

### Solution to Problem

The technology disclosed herein can be implemented, for example, as the following aspects.

(1) A wheel lock system disclosed herein includes: a body; a shaft member supported by the body so as to be rotatable around a rotation axis and having a recess formed in at least a part of an outer peripheral surface around the rotation axis; a wheel fixed to the shaft member to rotate together with the shaft member; and a lock mechanism that switches between an unlocked state permitting rotation of the wheel and a locked state restricting rotation of the wheel . The lock mechanism includes a linear body having a protrusion. The linear body is arranged in the outer peripheral surface formed with the recess of the shaft member, so as to be able to press the protrusion. The lock mechanism is configured to change from the unlocked state, where the protrusion is not fitted into the recess, to the locked state, when the protrusion fits into the recess, along with the movement of the linear body in a direction orthogonal to the rotation axis of the shaft member. This wheel lock system is configured to change from the unlocked state to the locked state when the protrusion fits into the recess. Therefore, as compared to the configuration of the conventional wheel lock system in which rotation of a wheel is restricted when a lock pin is inserted to a lock hole, this wheel lock system can reduce the possibility of fixation of the protrusion to the recess and can avoid occurrence of a failure in unlocking. Moreover, this wheel lock system is configured to change from the unlocked state to the locked state, when the protrusion fits into the recess along with the movement of the linear body in the direction orthogonal to the rotation axis of the shaft member. Therefore, as compared to the configuration of the conventional wheel lock system in which rotation of a wheel is regulated when a lock pin projects in a direction parallel to a rotation axis of a wheel and inserted to a lock hole, this wheel lock system can make small the moving distance of the protrusion when the wheel is locked, and the force required for locking the wheel, and can reduce the time required for locking the wheel.
(2) The wheel lock system described above may be configured such that the lock mechanism is configured to change from the locked state, where the protrusion is fitted into the recess, to the unlocked state, when the protrusion is released from fitting into the recess, along with the movement of the linear body in a direction orthogonal to the rotation axis of the shaft member. This wheel lock system, can make small the moving distance of the protrusion when the wheel is unlocked and the force required for unlocking the wheel, and can reduce the time required for unlocking the wheel.
(3) The wheel lock system described above may be configured such that a plurality of the recesses are formed in at least a part of the outer peripheral surface of the shaft member, and the linear body includes a plurality of the protrusions capable of fitting into the plurality of the recesses, respectively. According to this wheel lock system, a more reliable wheel lock can be achieved.
(4) The wheel lock system may be configured such that the linear body includes a core wire and an outer peripheral wire wound around an outer periphery of the core wire and functioning as the protrusion. This wheel lock system with a comparatively simple configuration can achieve locking/unlocking of the wheel by fitting/disenganging of the protrusion and the recess and facilitation of manufacturing and improvement in durability of the wheel lock system.
(5) The wheel lock system described above may be configured such that the outer peripheral wire is spirally wound around the outer periphery of the core wire. This wheel lock system, with a further simple configuration can achieve locking/unlocking of the wheel by fitting/ disengaging of the protrusion and the recess, and further facilitation of manufacturing and further improvement in durability of the wheel lock system.
(6) The wheel lock system may be configured such that the linear body includes a core wire and a spherical body formed on the core wire and functioning as the protrusion. This wheel lock system with a comparatively simple configuration can achieve locking/unlocking of the wheel by fitting/ disengaging of the protrusion and the recess and facilitation of manufacturing and improvement in durability of the wheel lock system.
(7) The wheel lock system may be configured such that the linear body includes a core wire and a rack member joined to an end portion of the core wire and having a plurality of teeth functioning as the protrusion. This wheel lock system with a comparatively simple configuration can achieve locking/unlocking of the wheel by fitting/ disengaging of the protrusion and the recess, and facilitation of manufacturing and improvement in durability of the wheel lock system.
(8) A carrier disclosed herein includes: the wheel lock system as described above; and a main body part attached with the body of the wheel lock system to a bottom portion of the main body part. This carrier can avoid occurrence of a failure in unlocking of the wheelfor moving the carrier along a floor surface while supporting the carrier, and can make small the moving distance of the protrusion when the wheel is locked and the force required for locking the wheel, and can reduce the time required for locking the wheel.

The technology disclosed herein can be implemented in various aspects and can be realized in aspects such as a wheel lock system, a carrier (for example, a suitcase, trolley, or stretcher) including the wheel lock system, and a manufacturing method of these.

### BRIEF DESCRIPTION OF DRAWINGS

FIG. 1 is a diagram that schematically shows the configuration of a suitcase 100 in a first embodiment.
FIG. 2 is a perspective view that shows the detailed configuration of a wheel lock system 10 in the first embodiment.
FIG. 3 is a perspective view that shows the detailed configuration of the wheel lock system 10 in the first embodiment.
FIG. 4 is a perspective view that shows the detailed configuration of the wheel lock system 10 in the first embodiment.
FIG. 5 is a side view that shows a part of the configuration of the wheel lock system 10 in an unlocked state in the first embodiment.
FIG. 6 is a side view that shows a part of the configuration of the wheel lock system 10 in a locked state in the first embodiment.
FIG. 7 is a perspective view that shows an external appearance configuration of an operation part 126 and the periphery thereof.
FIG. 8 is an exploded perspective view that shows an internal configuration of the operation part 126 and the periphery thereof.
FIG. 9 is an exploded perspective view that shows an internal configuration of the operation part 126 and the periphery thereof.
FIG. 10 is a diagram that shows operation of the operation part 126.
FIG. 11 is a diagram that shows an external appearance configuration of the operation part 126 in a modification example of the first embodiment.
FIG. 12 is a diagram that shows the external appearance configuration of the operation part 126 in another modification example of the first embodiment.
FIG. 13 is a diagram that shows the configuration of the periphery of a shaft member 132 in another modification example of the first embodiment.
FIG. 14 is a perspective view that shows the detailed configuration of a wheel lock system 10a in a second embodiment.
FIG. 15 is a perspective view that shows the detailed configuration of the wheel lock system 10a in the second embodiment.
FIG. 16 is a perspective view that shows the detailed configuration of the wheel lock system 10a in the second embodiment.
FIG. 17 is a side view that shows a part of the configuration of the wheel lock system 10a in an unlocked state in the second embodiment.
FIG. 18 is a side view that shows a part of the configuration of the wheel lock system 10a in a locked state in the second embodiment.
FIG. 19 is a diagram that shows the configuration of the wheel lock system 10a in a modification example of the second embodiment.
FIG. 20 is a perspective view that shows the detailed configuration of a wheel lock system 10b in a third embodiment.
FIG. 21 is a perspective view that shows the detailed configuration of the wheel lock system 10b in the third embodiment.
FIG. 22 is a perspective view that shows the detailed configuration of the wheel lock system 10b in the third embodiment.
FIG. 23 is a side view that shows a part of the configuration of the wheel lock system 10b in an unlocked state in the third embodiment.
FIG. 24 is a side view that shows a part of the configuration of the wheel lock system 10b in a locked state in the third embodiment.
FIG. 25 is a diagram that shows the configuration of a trolley 200 to which the wheel lock system 10 disclosed herein is applied.
FIG. 26 is a diagram that shows the configuration of the periphery of a handle part 220 of the trolley 200 to which the wheel lock system 10 disclosed herein is applied.
FIG. 27 is a diagram that shows the configuration of a stretcher 300 to which the wheel lock system 10 disclosed herein is applied.

### DESCRIPTION OF EMBODIMENTS

### A. First embodiment:

### A-1. Configuration of suitcase 100:

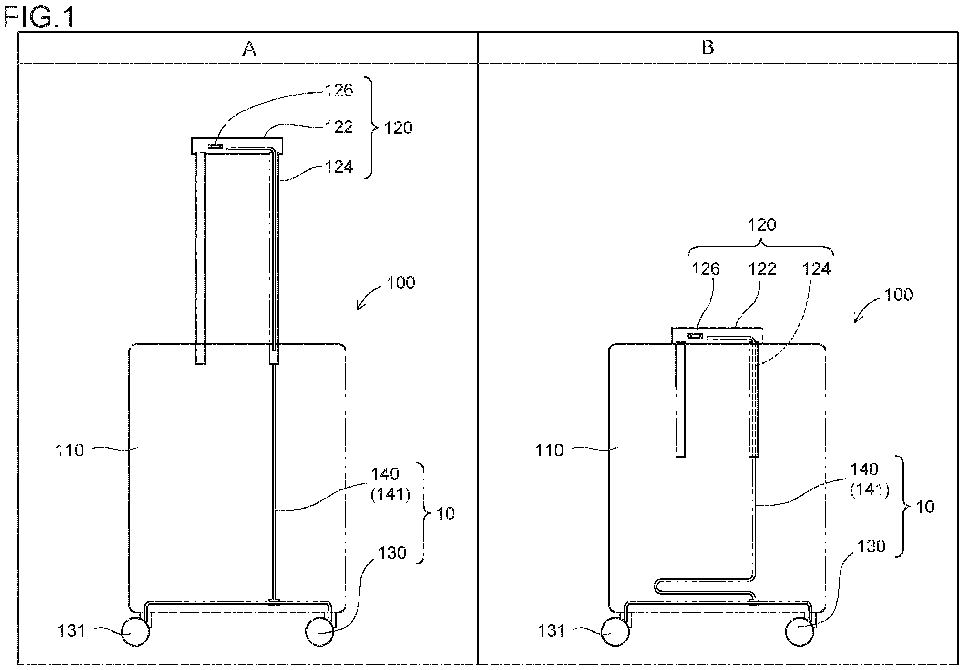

FIG. 1 is a diagram that schematically shows the configuration of a suitcase 100 in a first embodiment. The column A of FIG. 1 shows the external appearance configuration of the suitcase 100 in a state where a handle part 120 as described later is drawn. The column B of FIG. 1 shows the external appearance configuration of the suitcase 100 in a state where the handle part 120 is accommodated. FIG. 1 also shows a part of the configuration of the suitcase 100 that does not appear in the external appearance, for the purpose of convenience of description.

The suitcase 100 is a carrier carried along a floor surface and includes a main body part 110, a handle part 120, a caster part 130, and a lock mechanism 140. The caster part 130 and the lock mechanism 140 is included in a wheel lock system 10. Hereinafter, description will be given assuming that the posture of the suitcase 100 is the posture in which the caster part 130 is located below the main body part 110. However, the suitcase 100 may take another posture.

The main body part 110 is a box body that accommodates a baggage and is a member having a substantially rectangular parallelepiped shape, for example. The handle part 120 is a portion gripped when the suitcase 100 is lifted up or conveyed along a floor surface. The handle part 120 includes two pole parts 124 and a grip part 122. Each pole part 124 is a member having a substantially square pole shape, for example, and is attached to the main body part 110 in a posture extending in the up and down direction. The grip part 122 is a member having a substantially columnar shape, for example, and is attached to upper end portions of the two pole parts 124 so as to extend between the upper end portions. The grip part 122 is provided with an operation part 126 as described later for operation of the lock mechanism 140. The handle part 120 is configured to be able to switch between an extension state (see the column A of FIG. 1) in which the two pole parts 124 extend upward from an upper surface of the main body part 110 and an accommodation state (see the column B of FIG. 1) in which the two pole parts 124 are accommodated in an accommodation space provided in the inside of the main body part 110 or a side surface of the main body part 110.

### A-2. Configuration and operation of wheel lock system 10:

As described above, the wheel lock system 10 includes the caster part 130 and the lock mechanism 140. The caster part 130 is attached to a bottom portion of the main body part 110 and includes a wheel 131. The wheel 131 rotates while supporting the main body part 110, and thereby, the caster part 130 smoothly moves the suitcase 100 along the floor surface. In the present embodiment, the caster part 130 is provided in each of four corners of the bottom portion of the main body part 110.

The lock mechanism 140 is a mechanism that switches between an unlocked state and a locked state. Rotation of the wheel 131 of each caster part 130 is permitted in the unlocked state and rotation of the wheel 131 of each caster part 130 is restricted in the locked state. The lock mechanism 140 being in the unlocked state enables the suitcase 100 to smoothly move along the floor surface. The lock mechanism 140 being in the locked state can prevent the suitcase 100 from unintentional movement.

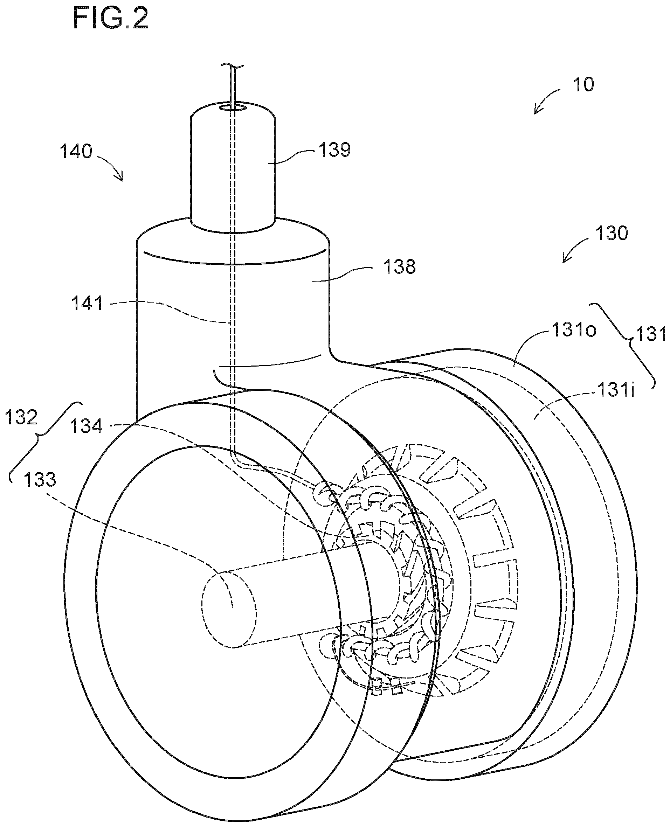

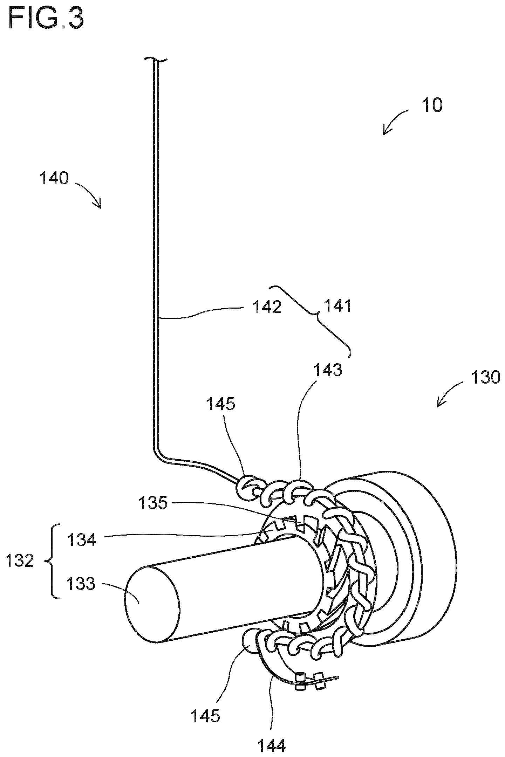

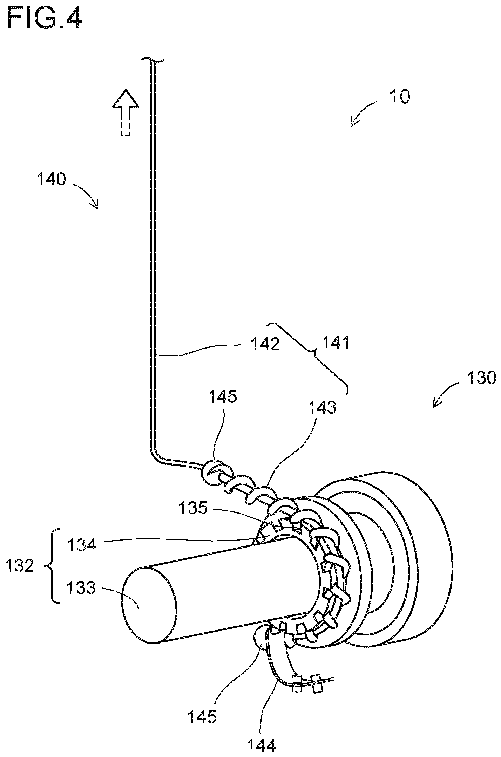

FIGS. 2 to 4 are perspective views of the detailed configuration of the wheel lock system 10 of the first embodiment. In FIGS. 2 to 4, in order to showing the configuration of the wheel lock system 10 (the caster part 130 and the lock mechanism 140) in a way easily understood, the configuration is shown by making some components transparent and omitting illustration of some components. FIGS. 2 and 3 show a state where the lock mechanism 140 is in the unlocked state and FIG. 4 shows a state where the lock mechanism 140 is in the locked state.

As shown in FIGS. 2 to 4, the caster part 130 includes a body 138, two wheels 131, and a shaft member 132. Each member included in the caster part 130 is formed of a resin or metal, for example.

The body 138 is attached to a bottom portion of a main body part 110 via a spindle 139 extending in the vertical direction, so as to be turnable in the horizontal direction. The shaft member 132 includes: a center shaft member 133 having a substantially columnar shape; and a substantially hollow-cylindrical outer peripheral shaft member 134 arranged so as to cover a part of the outer peripheral surface of the center shaft member 133. The outer peripheral shaft member 134 is fixed to the center shaft member 133 in a state of being arranged concentrically with the center shaft member 133. The shaft member 132 (the center shaft member 133 thereof) is supported by the body 138 so as to be rotatable around the rotation axis in the horizontal direction. The outer peripheral surface of the outer peripheral shaft member 134 is formed with a plurality of recesses 135. That is, in the present embodiment, the recesses 135 are formed in at least a part of the outer peripheral surface around the rotation axis of the shaft member 132. In the present embodiment, a spiral groove is formed on the outer peripheral surface of the outer peripheral shaft member 134 and portions of the groove form the plurality of recesses 135.

Each wheel 131 is a member having a substantially disc shape and is fixed to both ends of the center shaft member 133 of the shaft member 132 so as to be concentric with the shaft member 132. Therefore, along with the rotation of the shaft member 132 in the rotation axis, each wheel 131 rotates in the same axis. In the present embodiment, each wheel 131 includes an inside wheel 131i and an outside wheel 131o fixed to the inside wheel 131i so as to cover the outer periphery of the inside wheel 131i, and the inside wheel 131i is fixed to the center shaft member 133.

The lock mechanism 140 includes a linear body 141 and an force member 144. The linear body 141 includes a core wire 142 and an outer peripheral wire 143 spirally wound around the outer periphery of the core wire 142. The outer peripheral wire 143 is wound around a portion of a distal end side (lower end side) in the core wire 142 and both ends of the outer peripheral wire 143 are fixed to the core wire 142 by a substantially spherical locking member 145. The diameter and the pitch of the outer peripheral wire 143 are set according to the width and the pitch of the recess 135 formed on the outer peripheral surface of the outer peripheral shaft member 134. That is, each part of the outer peripheral wire 143 functions as a protrusion capable of fitting into each recess 135 formed on the outer peripheral surface of the outer peripheral shaft member 134. The core wire 142 and the outer peripheral wire 143 are formed of a metal or resin, for example.

The distal end portion (the portion arranged with the outer peripheral wire 143) of the linear body 141 is curved in a substantially arc shape so as to face the outer peripheral surface of the outer peripheral shaft member 134 and is arranged on the outer peripheral surface of the outer peripheral shaft member 134 so as to be able to press the outer peripheral wire 143. The remaining portion of the linear body 141 is bent at a predetermined position, extends upward, passes through the body 138 and the spindle 139 to reach the inside of the main body part 110 (see FIG. 2), further passes the inside of the pole part 124 and the grip part 122 of the handle part 120, and reaches the operation part 126 provided in the grip part 122 (see FIG. 1). The force member 144 is configured as a leaf spring, for example, joined to the distal end portion of the linear body 141, and biases the distal end portion in a direction away from the outer peripheral surface of the outer peripheral shaft member 134.

The lock mechanism 140 is configured to switch between the states (above-mentioned unlocked state and locked one). The outer peripheral wire 143 functioning as the protrusion of the linear body 141 is not fitted into the recess 135 formed on the outer peripheral surface of the outer peripheral shaft member 134 of the shaft member 132 in the unlocked state. That is, the state permits rotation of the shaft member 132 (and the wheel 131 fixed to the shaft member 132)The outer peripheral wire 143 functioning as the protrusion of the linear body 141 is fitted to the recess 135 in the locked state. That is, the locked state restricts rotation of the shaft member 132 (the wheel 131 fixed to the shaft member 132) by the linear body 141.

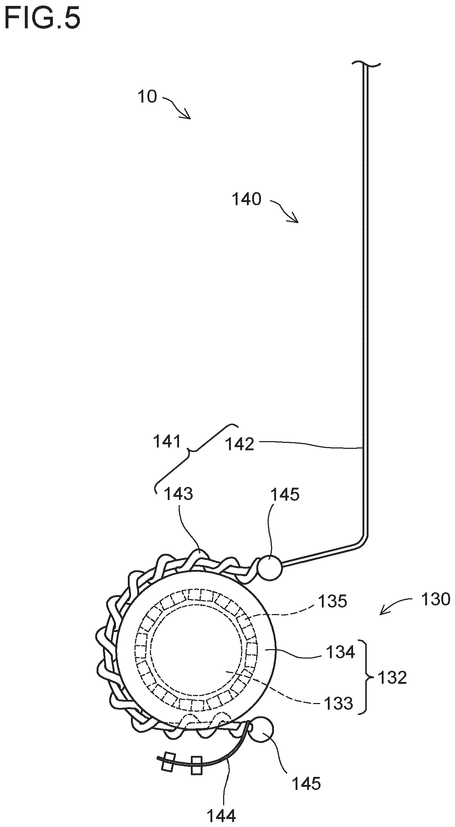

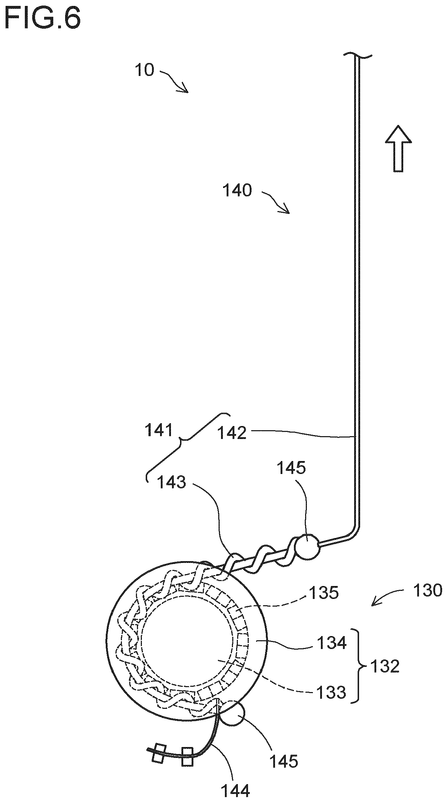

FIG. 5 is a side view showing the configuration of a part of the wheel lock system 10 in the unlocked state. FIG. 6 is a side view showing the configuration of a part of the wheel lock system 10 in the locked state in the first embodiment. In the unlocked state (FIGS. 3 and 5), when the core wire 142 forming the linear body 141 receives a tensile load according to the operation of the operation part 126 as described later, as shown in FIGS. 4 and 6, the distal end portion (the portion arranged with the outer peripheral wire 143) of the linear body 141 approaches the outer peripheral surface of the outer peripheral shaft member 134 of the shaft member 132 against the biasing force by the force member 144. As a result, the outer peripheral wire 143 as the protrusion fits into the recess 135 formed on the outer peripheral surface of the outer peripheral shaft member 134 so as to establish the locked state. That is, the lock mechanism 140 is configured to change from the unlocked state, where the protrusion (outer peripheral wire 143) is not fitted into the recess 135, to the locked state, when the protrusion (outer peripheral wire 143) fits into the recess 135, along with the movement of the linear body 141 in a direction (the inward direction of the plane of paper of FIGS. 5 and 6) orthogonal to the rotation axis of the shaft member 132. The movement direction of the linear body 141 at this time approximately coincides with the tangent direction of the outer peripheral surface of the outer peripheral shaft member 134.

On the other hand, in the locked state (FIGS. 4 and 6), when the core wire 142 forming the linear body 141 does not anymore receive a tensile load according to the operation of the operation part 126 as described later, as shown in FIGS. 3 and 5, the distal end portion (the portion arranged with the outer peripheral wire 143) of the linear body 141 separates from the outer peripheral surface of the outer peripheral shaft member 134 of the shaft member 132 by the biasing force by the force member 144. As a result, the unlocked state is established, where the outer peripheral wire 143 as the protrusion is not fitted into the recess 135 formed on the outer peripheral surface of the outer peripheral shaft member 134. That is, the lock mechanism 140 is configured to change from the locked state, where the protrusion (outer peripheral wire 143) is fitted into the recess 135, to the unlocked state, when the protrusion (outer peripheral wire 143) is released from fitting into the recess 135, along with the movement of the linear body 141 in a direction (the inward direction of the plane of paper of FIGS. 5 and 6) orthogonal to the rotation axis of the shaft member 132.

### A-3. Configuration and operation of operation part 126

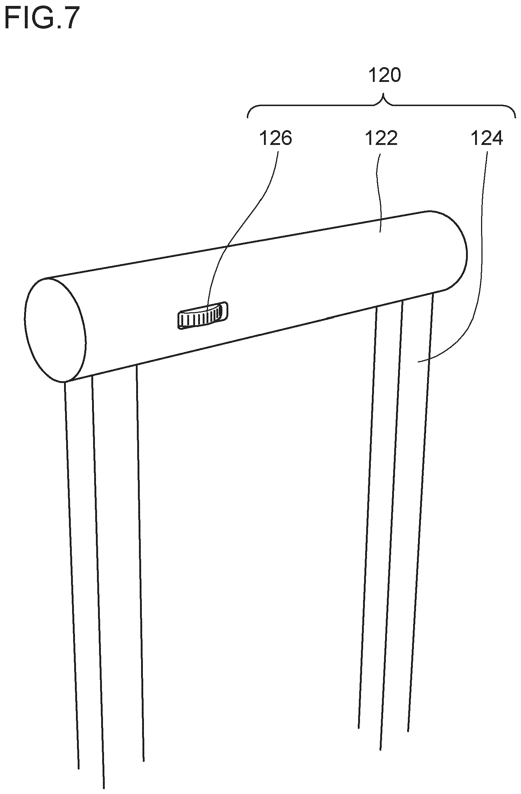

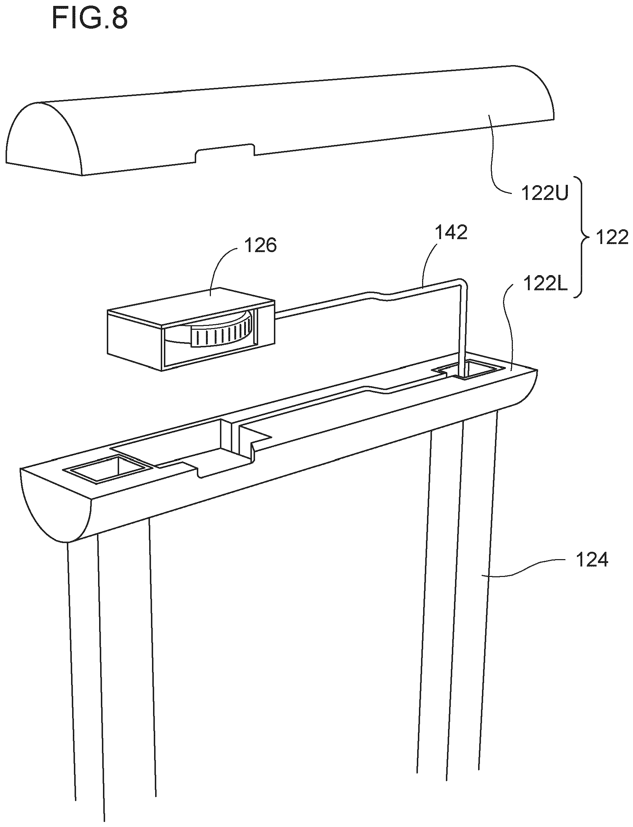

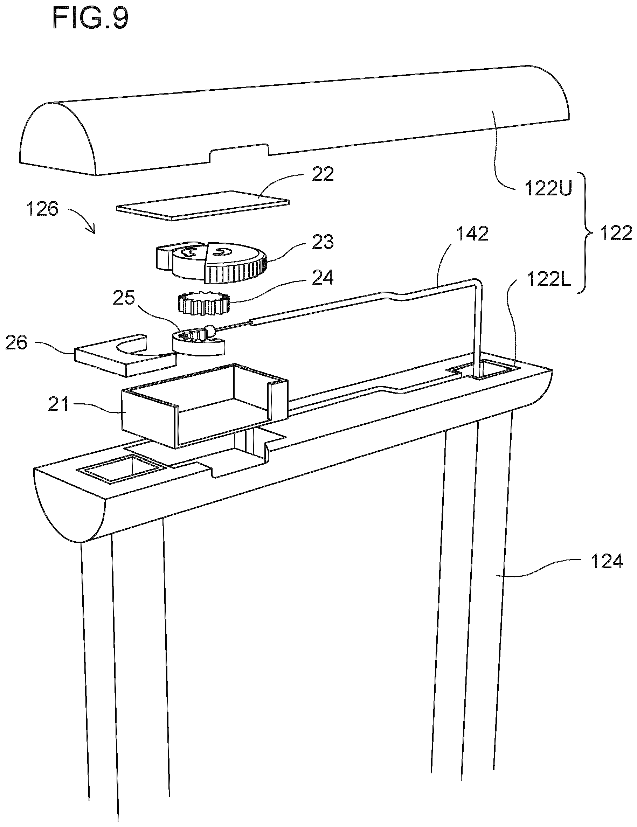

FIG. 7 is a perspective view showing the external appearance configuration of the operation part 126 and the periphery of the operation part 126. FIGS. 8 and 9 are exploded perspective views showing the internal configuration of the operation part 126 and the periphery of the operation part 126. As described above, the operation part 126 is provided in the grip part 122 of the handle part 120. More specifically, as shown FIGS. 8 and 9, the grip part 122 of the handle part 120 includes an upper grip part 122U forming an upper half of the grip part 122 and a lower grip part 122L forming a lower half of the grip 122. The operation part 126 is accommodated in the internal space of the grip part 122 formed by the recess formed in the upper grip part 122U and/or the lower grip part 122L.

As shown in FIG. 9, the operation part 126 includes a housing 21, a lid body 22, a dial 23, a pinion 24, a rack 25, and a positioning member 26. The housing 21 is a box body having a substantially parallelepiped shape and a top surface and one side surface thereof are opened. The housing 22 is a member that opens and closes the top surface of the housing 21. The positioning member 26 is accommodated in the inside of the housing 21, positions the dial 23 or the like, and secures a space for movement of the dial 23 or the like. The dial 23 is a member having a substantially disc shape and is accommodated in a rotatable manner in the housing 21 such that a part of the dial 23 is exposed from the opening of the side surface of the housing 21. The outer peripheral surface of the portion of the dial 23 that is exposed from the housing 21 is processed for slippage prevention (for example, groove processing). The pinion 24 is a member having a substantially disc shape and the outer peripheral surface of the pinion 24 is formed with a plurality of teeth. The pinion 24 is accommodated in and fixed to the internal space of the dial 23 and rotates along with the rotation of the dial 23. The rack 25 is a flexible long member and one side surface of the rack 25 is formed with a plurality of teeth. The teeth of the rack 25 meshes with the teeth of the pinion 24, respectively, and when the pinion 24 rotates, the rack 25 slides in the axial direction. A core wire 142 forming the linear body 141 of the lock mechanism 140 is fixed to the end portion of the rack 25.

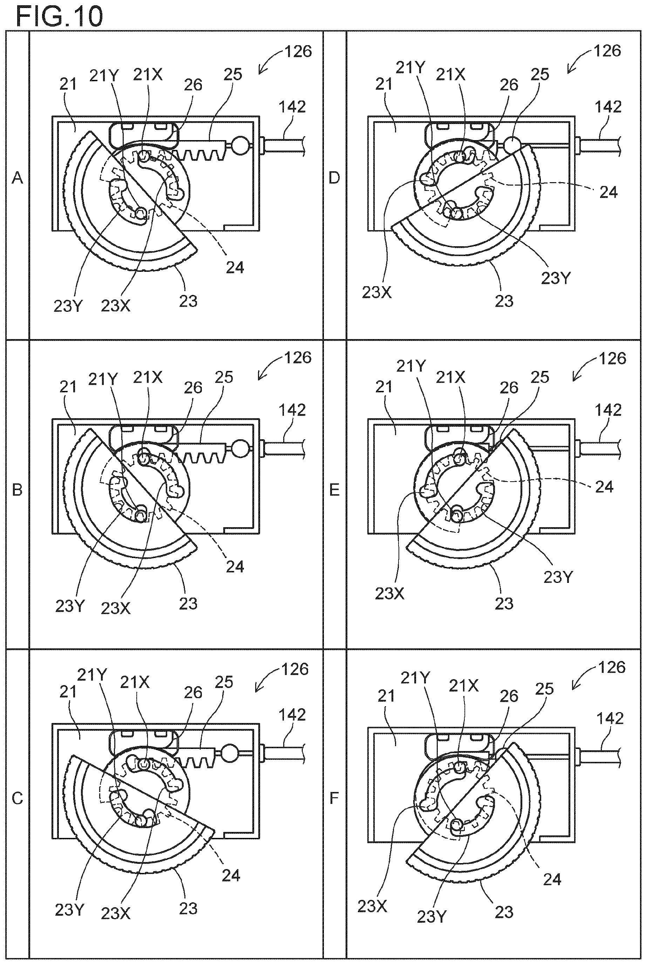

FIG. 10 is a diagram that shows operation of the operation part 126. Each column of FIG. 10 shows a positional relationship of portions of the operation part 126 in operation in top view. In FIG. 10, the operation is shown making some components of the operation part 126 transparent and omitting illustration of some components of the operation part 126. As shown in column A of FIG. 10, the bottom surface of the housing 21 is formed with two protrusion portions 21X, 21Y extending upward. The dial 23 is formed with two holes 23X, 23Y. In the top view, one hole 23X of the dial 23 includes an arc portion (in the state shown in column A of FIG. 10, the portion extending from the position of twelve o'clock to the position of three o'clock) around the rotation axis of the dial 23, and a claw portion extending both end portions of the arc portion to the outer peripheral side. The other hole 23Y of the dial 23 includes an arc portion (in the state shown in column A of FIG. 10, the portion extending from the position of six o'clock to the position of nine o'clock) around the rotation axis of the dial 23, and a claw portion extending both end portions of the arc portion to the inner peripheral side. One protrusion portion 21X formed in the housing 21 is inserted to the one hole 23X formed in the dial 23. The other protrusion portion 21Y formed in the housing 21 is inserted to the other hole 23Y formed in the dial 23.

The dial 23 is biased to a predetermined direction (in FIG. 10, the direction from upward to downward of the plane of paper) by a force member (for example, a spring) not shown. Therefore, as shown in column A and column F of FIG. 10, in a state where the protrusion portions 21X, 21Y formed in the housing 21 are located respectively at the end portions of the holes 23X, 23Y formed in the dial 23, the protrusion portions 21X, 21Y fit into the claw portions of the holes 23X, 23Y, respectively, so that rotation of the dial 23 is restricted.

Column A of FIG. 10 shows a state of the operation part 126 when the lock mechanism 140 is in the above-mentioned unlocked state. In this state, when the dial 23 is pressed in the upward direction of the plane of paper, as shown in column B of FIG. 10, the protrusion portions 21X, 21Y formed in the housing 21 are detached respectively from the claw portions of the holes 23X, 23Y formed in the dial 23 and move to the arc portion, so that a state is established where rotation of the dial 23 is permitted. In this state, as shown in columns C to E of FIG. 10, when the dial 23 is rotated in the counterclockwise direction, the pinion 24 rotates in the counterclockwise direction along with the rotation of the dial 23, and accordingly, the rack 25 moves in a direction of pulling the core wire 142. As a result, the tensile load is applied to the core wire 142 joined to the rack 25 and the above-mentioned locked state of the lock mechanism 140 is established. In the state shown in column E of FIG. 10, when a hand is released from the dial 23, the force member not shown presses the dial 23 downward of the plane of paper, and a state is established where rotation of the dial 23 is restricted (the state shown in the column F of FIG. 10). The changing from the locked state to the unlocked state is achieved by the operation opposite to the above-mentioned operation.

### A-4. Effect of first embodiment:

As described above, a wheel lock system 10 applied to a suitcase 100 of the present embodiment includes: a body 138; a shaft member 132 supported by the body 138 so as to be rotatable around a rotation axis and having a recess 135 formed in at least a part of an outer peripheral surface around the rotation axis; a wheel 131 fixed to the shaft member 132 to rotate together with the shaft member 132; and a lock mechanism 140 that switches between an unlocked state and a locked state. The unlocked state permits rotation of the wheel 131 and the locked state restricts rotation of the wheel 131 . The lock mechanism 140 includes the linear body 141 having the outer peripheral wire 143 function as the protrusion. The linear body 141 is arranged in the outer peripheral surface formed with the recess 135 of the shaft member 132, so as to be able to press the protrusion (outer peripheral wire 143). The lock mechanism 140 is configured to change from the unlocked state where the protrusion (outer peripheral wire 143) is not fitted into the recess 135 to the locked state when the protrusion (outer peripheral wire 143) fits into the recess 135 along with the movement of the linear body 141 in a direction orthogonal to the rotation axis of the shaft member 132.

As described above, the wheel lock system 10 of the present embodiment is configured to transition from the unlocked state to the locked state when the protrusion (outer peripheral wire 143) fits into the recess 135. Therefore, as compared to the configuration of the conventional wheel lock system in which rotation of a wheel is restricted, this wheel lock system can reduce the possibility of fixation of the protrusion (outer peripheral wire 143) to the recess 135 and can avoid an occurrence of a failure in unlocking. Moreover, this wheel lock system 10 of the present embodiment is configured to change from the unlocked state to the locked state when the protrusion (outer peripheral wire 143) fits into the recess 135 along with the movement of the linear body 141 in the direction orthogonal to the rotation axis of the shaft member 132. Therefore, as compared to the configuration of the conventional wheel lock system in which rotation of a wheel is restricted when a lock pin projects in a direction parallel to a rotation axis of a wheel and inserted to the lock hole, this wheel lock system can make small the moving distance of the protrusion (outer peripheral wire 143) when the wheel 131 is locked and the force required for locking the wheel 131, and can make short the time required for locking the wheel 131.

In the wheel lock system 10, the lock mechanism 140 is configured to change from the locked state, where the protrusion (outer peripheral wire 143) is fitted into the recess 135, to the unlocked state, when the protrusion (outer peripheral wire 143) is released from fitting into the recess 135, along with the movement of the linear body 141 in a direction orthogonal to the rotation axis of the shaft member 132. Therefore, the wheel lock system 10 of the present embodiment can make small the moving distance of the protrusion (outer peripheral wire 143) when unlocking of the wheel 131 and the force required for unlocking the wheel 131, and can make short the time required for unlocking the wheel 131.

In the wheel lock system 10 of the present embodiment, the linear body 141 of the lock mechanism 140 includes the core wire 142 and the outer peripheral wire 143 wound around the outer periphery of the core wire 142 and functioning as the protrusion. Therefore, the wheel lock system 10 of the present embodiment, with a comparatively simple configuration cam achieve locking/unlocking of the wheel 131 by fitting/disengaging of the protrusion (outer peripheral wire 143) and the recess 135, and facilitation of manufacturing and improvement in durability of the wheel lock system 10. Specifically, since the wheel lock system 10 of the present embodiment has a configuration in which the outer peripheral wire 143 is spirally wound around the outer periphery of the core wire 142, it is possible to achieve further facilitation of manufacturing and further improvement in durability of the wheel lock system 10.

In the wheel lock system 10 of the present embodiment, a plurality of the recesses 135 are formed in at least a part of the outer peripheral surface of the shaft member 132, and the linear body 141 includes a plurality of the protrusions (a plurality of portions of the outer peripheral wire 143) capable of fitting to the plurality of the recess 135, respectively. Therefore, the wheel lock system 10 of the present embodiment can achieve more reliable locking of the wheel 131.

### A-5. Modification example of first embodiment:

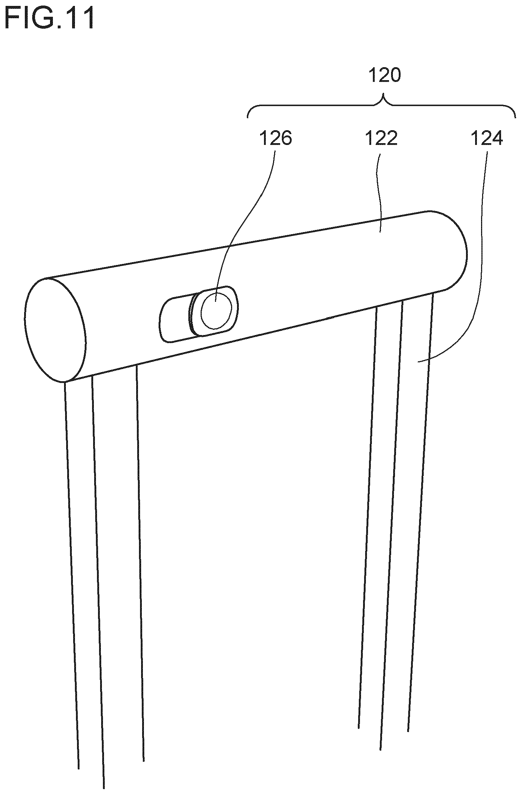

FIG. 11 is a diagram that shows an external appearance configuration of the operation part 126 in a modification example of the first embodiment. In the modification example shown in FIG. 11, the type of the operation part 126 is not the dial type but is the slide switch type. In this modification example, along with operation of sliding a slide switch, application/release of the tensile load to the core wire 142 forming the linear body 141 of the lock mechanism 140 is switched, and as a result, the locked state/unlocked state of the wheel 131 is switched.

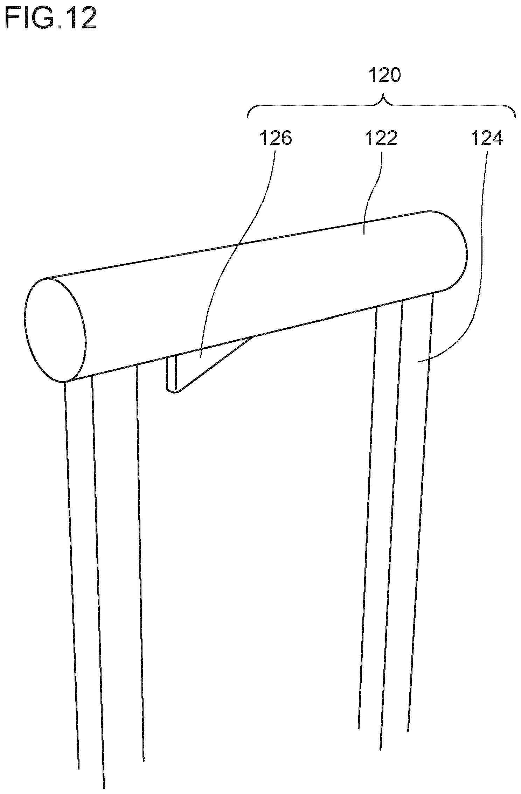

FIG. 12 is a diagram that shows an external appearance configuration of the operation part 126 in another modification example of the first embodiment. In the modification example shown in FIG. 12, the type of the operation part 126 is not the dial type but is the lever type. In this modification example, along with operation of gripping/releasing a lever, application/release of the tensile load to the core wire 142 forming the linear body 141 of the lock mechanism 140 is switched, and as a result, the locked state/unlocked state of the wheel 131 is switched.

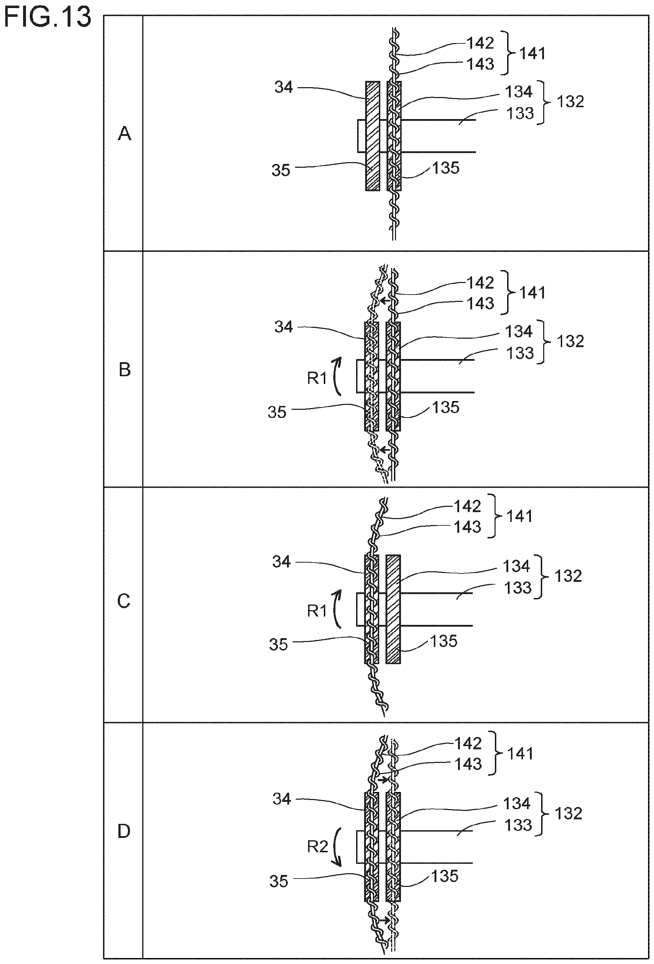

FIG. 13 is a diagram that shows the configuration of the periphery of the shaft member 132 in another modification example of the first embodiment. In the modification example shown in FIG. 13, even in the above-mentioned locked state of the wheel 131, while rotation of the wheel 131 in one rotation direction (the direction R2 in FIG. 13) is restricted, rotation of the wheel 131 in the other rotation direction(the direction R1 of FIG. 13) is permitted. In this modification example, in addition to the outer peripheral shaft member 134 (hereinafter, referred to as "the first outer peripheral shaft member 134" in this modification example), a second outer peripheral shaft member 34 is fitted into the center shaft member 133 of the shaft member 132. The second outer peripheral shaft member 34 has substantially the same diameter as that of the first outer peripheral shaft member 134. As similar to the outer peripheral surface of the first outer peripheral shaft member 134, the outer peripheral surface of the second outer peripheral shaft member 34 is formed with a spiral groove. The first outer peripheral shaft member 134 is fixed to the center shaft member 133, and rotates together with the center shaft member 133. On the other hand, the second outer peripheral shaft member 34 is supported by the center shaft member 133 via a one-direction bearing, and although the second outer peripheral shaft member 34 freely rotates in the direction R1 of FIG. 13 with respect to the center shaft member 133, the second outer peripheral shaft member 34 can rotate in the direction R2 only together with the center shaft member 133. Although not shown, the wheel 131 is fixed to both ends of the center shaft member 133.

Column A of FIG. 13 shows the locked state, where the outer peripheral wire 143 functioning as the protrusion of the linear body 141 is fitted into the groove (recess 135) formed on the outer peripheral surface of the first outer peripheral shaft member 134 and rotation of the center shaft member 133 (and the wheel 131 fixed to the center shaft member 133) is restricted by the linear body 141. In this state, when the rotation force of the direction R1 is applied to the wheel 131 (and the center shaft member 133 fixed to the wheel 131), as shown in the column B of FIG. 13, the protrusion (outer peripheral wire 143) of the linear body 141 slides in the groove of the first outer peripheral shaft member 134 and the second outer peripheral shaft member 34, and the linear body 141 moves from the position facing the first outer peripheral shaft member 134 to the position facing the second outer peripheral shaft member 34. In this state, since the second outer peripheral shaft member 34 freely rotates in the direction R1 with respect to the center shaft member 133, as shown in column C of FIG. 13, the center shaft member 133 and the wheel 131 rotate by the rotation force described above.

In the state shown in column C of FIG. 13, when the rotation force of the direction R2 is applied even by a small amount to the wheel 131 (and the center shaft member 133 fixed to the wheel 131), the second outer peripheral shaft member 34 attempts to rotate together with the center shaft member 133. Therefore, as shown in column D of FIG. 13, the protrusion (outer peripheral wire 143) of the linear body 141 slides in the groove of the second outer peripheral shaft member 34 and the first outer peripheral shaft member 134, and the linear body 141 moves from the position facing the second outer peripheral shaft member 34 to the position facing the first outer peripheral shaft member 134. As a result, rotation of the wheel 131 in the direction R2 is restricted.

As described above, in the modification example shown in FIG. 13, even in the locked state of the wheel 131, while rotation of the wheel 131 in one rotation direction is regulated, rotation of the wheel 131 in the other rotation direction can be permitted, so that variations of lock modes of the wheel 131 by the wheel lock system 10 can be increased.

### B. Second embodiment:

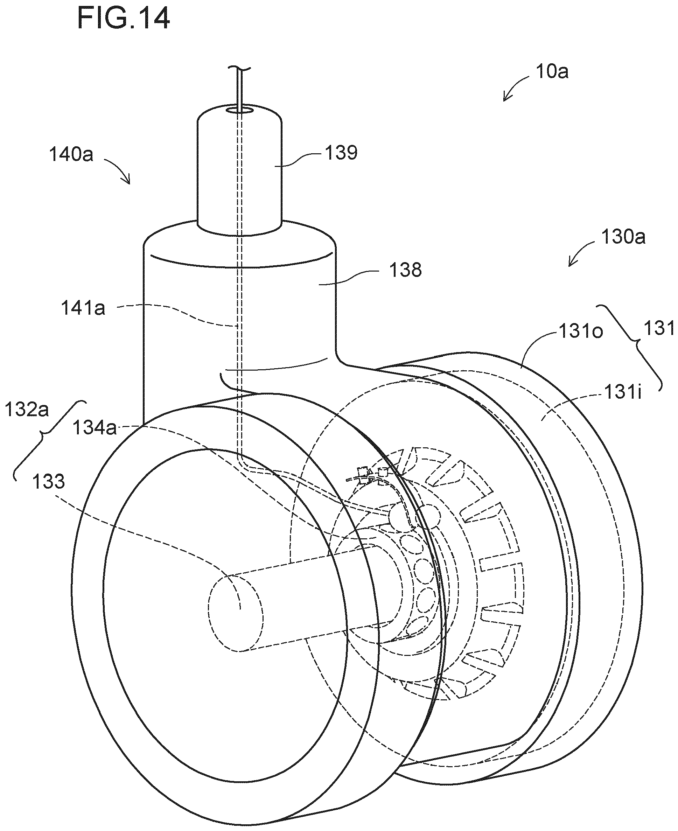

FIGS. 14 to 16 are perspective views of the detailed configuration of a wheel lock system 10a (the caster part 130a and the lock mechanism 140a) in a second embodiment. Hereinafter, the description of any component that is the same as that of the wheel lock system 10 of the above-mentioned first embodiment among the components of the wheel lock system 10a of the second embodiment is omitted as appropriate by marking it with the same symbol.

As similar to the first embodiment, the caster part 130a in the second embodiment includes the body 138, the two wheels 131, and a shaft member 132a. The shaft member 132a includes: a center shaft member 133 having a substantially columnar shape; and a substantially hollow-cylindrical outer peripheral shaft member 134a arranged so as to cover a part of the outer peripheral surface of the center shaft member 133. The outer peripheral surface of the outer peripheral shaft member 134a is formed with a plurality of recesses 135a. In the second embodiment, each recess 135a formed on the outer peripheral surface of the outer peripheral shaft member 134a is formed in a bowl shape.

As similar to the first embodiment, the lock mechanism 140a in the second embodiment includes a linear body 141a and a force member 144a. In the second embodiment, the linear body 141a includes the core wire 142 and the spherical body 146 formed on the core wire 142. The spherical body 146 is joined to the distal end of the core wire 142. The diameter of the spherical body 146 is set according to the diameter of the recess 135a formed on the outer peripheral surface of the outer peripheral shaft member 134a. That is, the spherical body 146 functions as a protrusion capable of fitting into each recess 135a formed on the outer peripheral surface of the outer peripheral shaft member 134a.

The distal end portion (the portion arranged with the spherical body 146) of the linear body 141a is arranged on the outer peripheral surface of the outer peripheral shaft member 134a to face the outer peripheral surface of the outer peripheral shaft member 134a so as to be able to press the spherical body 146. The force member 144a is joined to the distal end portion of the linear body 141a, and biases the distal end portion in a direction away from the outer peripheral surface of the outer peripheral shaft member 134a.

The lock mechanism 140a is configured to switch between a state (unlocked state), where the spherical body 146 functioning as the protrusion of the linear body 141a is not fitted into the recess 135a formed on the outer peripheral surface of the outer peripheral shaft member 134a of the shaft member 132a, that is, a state where rotation of the shaft member 132a (and the wheel 131 fixed to the shaft member 132a) is permitted, and a state (locked state), where the spherical body 146 functioning as the protrusion of the linear body 141a is fitted into the recess 135a, that is, a state where rotation of the shaft member 132a (the wheel 131 fixed to the shaft member 132a) is restricted by the linear body 141a.

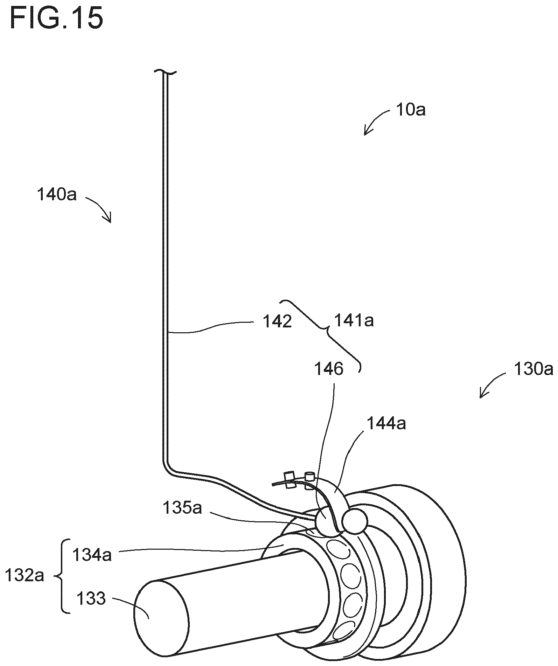

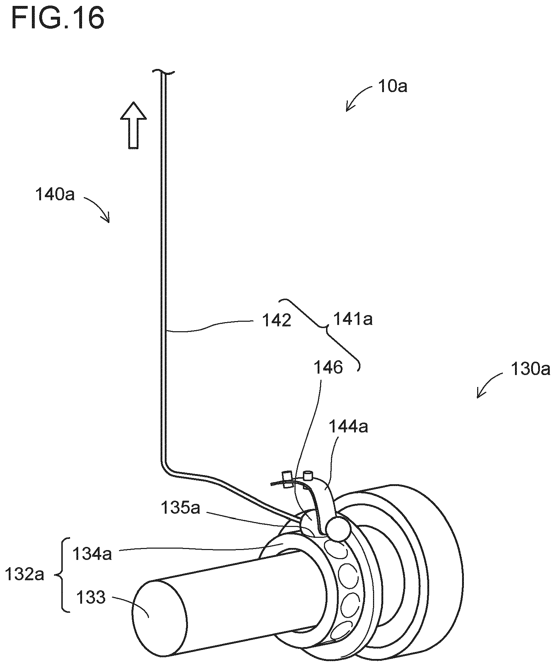

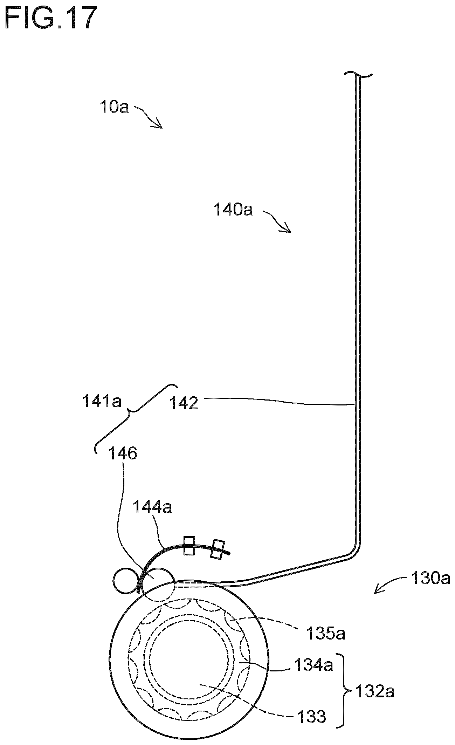

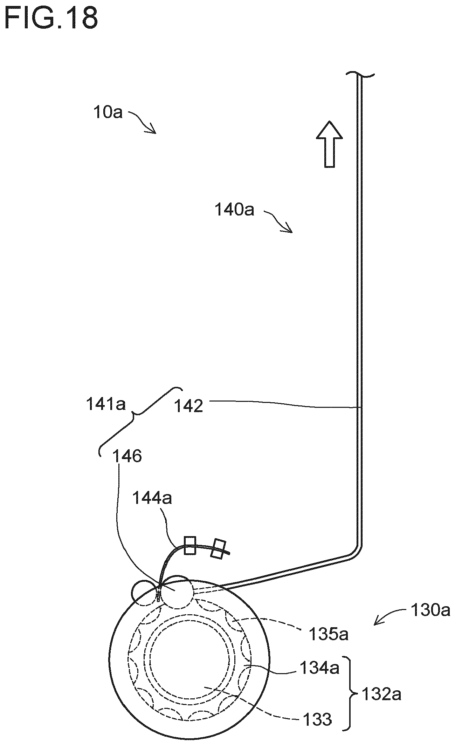

FIG. 17 is a side view showing the configuration of a part of the wheel lock system 10a in the unlocked state in the second embodiment. FIG. 18 is a side view showing the configuration of a part of the wheel lock system 10a in the locked state in the second embodiment. In the unlocked state (FIGS. 15 and 17), when the core wire 142 forming the linear body 141a receives a tensile load according to the operation of the operation part 126 as similar to the first embodiment, as shown in FIGS. 16 and 18, the distal end portion (the portion arranged with the spherical body 146) of the linear body 141a approaches the outer peripheral surface of the outer peripheral shaft member 134a of the shaft member 132a against the biasing force by the force member144a. As a result, the spherical body 146 as the protrusion fits into the recess 135a formed on the outer peripheral surface of the outer peripheral shaft member 134a so as to establish the locked state. That is, the lock mechanism 140a is configured to change from the unlocked state, where the protrusion (spherical body 146) is not fitted into the recess 135a, to the locked state when the protrusion (spherical body 146) fits into the recess 135a along with the movement of the linear body 141a in a direction (the inward direction of the plane of paper of FIGS. 17 and 18) orthogonal to the rotation axis of the shaft member 132a. The movement direction of the linear body 141a at this time approximately coincides with the tangent direction of the outer peripheral surface of the outer peripheral shaft member 134a.

On the other hand, in the locked state (FIGS. 16 and 18), when the core wire 142 forming the linear body 141a does not anymore receive a tensile load according to the operation of the operation part 126 as similar to the first embodiment, as shown in FIGS. 15 and 17, the distal end portion (the portion arranged with the spherical body 146) of the linear body 141a is separated from the outer peripheral surface of the outer peripheral shaft member 134a of the shaft member 132a by the biasing force by the force member144a. As a result, the unlocked state is established where the spherical body 146 as the protrusion is not fitted into the recess 135a formed on the outer peripheral surface of the outer peripheral shaft member 134a. That is, the lock mechanism 140a is configured to change from the locked state, where the protrusion (spherical body 146) is fitted into the recess 135a, to the unlocked state when the protrusion (spherical body 146) is released from fitting into the recess 135a, along with the movement of the linear body 141a in a direction (the inward direction of the plane of paper of FIGS. 17 and 18) orthogonal to the rotation axis of the shaft member 132a.

As described above, as similar to the wheel lock system 10 of the first embodiment, in the wheel lock system 10a of the second embodiment, the lock mechanism 140a is configured to change from the unlocked state, where the protrusion (spherical body 146) is not fitted into the recess 135a, to the locked state when the protrusion (spherical body 146) fits into the recess 135a, along with the movement of the linear body 141a in a direction orthogonal to the rotation axis of the shaft member 132a. Therefore, it is possible to reduce the possibility of fixation of the protrusion (spherical body 146) to the recess 135a and to avoid occurrence of a failure in unlocking. It is possible to make small the moving distance of the protrusion (spherical body 146) when the wheel 131 is locked and the force required for unlocking the wheel 131, and to make short the time required for unlocking the wheel 131.

In the wheel lock system 10a of the second embodiment, the linear body 141a of the lock mechanism 140 includes the core wire 142 and the spherical body 146 formed on the core wire 142 and functioning as the protrusion. Therefore, according to the wheel lock system 10a of the second embodiment, with a comparatively simple configuration, locking/unlocking of the wheel 131 by fitting/disengaging of the protrusion (spherical body 146) and the recess 135a can be achieved, and facilitation of manufacturing and improvement in durability of the wheel lock system 10a can be achieved.

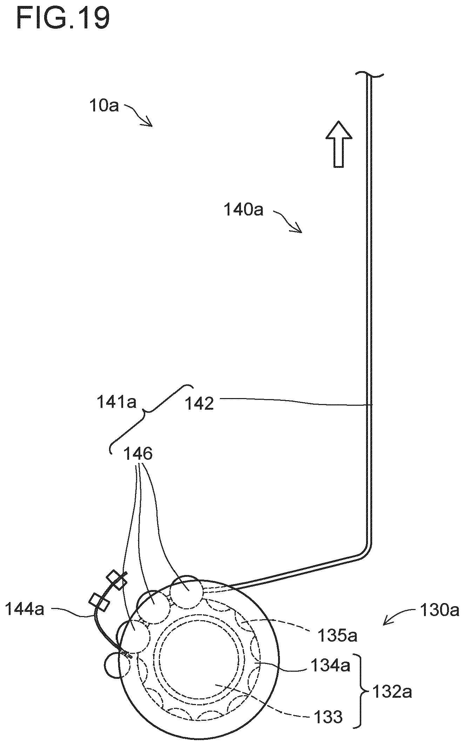

FIG. 19 is a diagram that shows the configuration of the wheel lock system 10a in a modification example of the second embodiment. In the modification example shown in FIG. 19, the linear body 141a includes a plurality of (three in the example of FIG. 19) spherical bodies 146 formed on the core wire 142. The pitch of each spherical body 146 is set according to the pitch of the recess 135a formed on the outer peripheral surface of the outer peripheral shaft member 134a. That is, each of the plurality of the spherical bodies 146 functions as a protrusion capable of fitting respectively into each of the plurality of recesses 135a formed on the outer peripheral surface of the outer peripheral shaft member 134a. In the modification example shown in FIG. 19, a plurality of the recess 135a are formed in at least a part of the outer peripheral surface of the shaft member 132a, and the linear body 141a includes a plurality of protrusions (a plurality of spherical bodies 146) capable of fitting respectively into the plurality of the recesses 135a, and accordingly, further reliable locking of the wheel 131 can be achieved.

### C. Third embodiment:

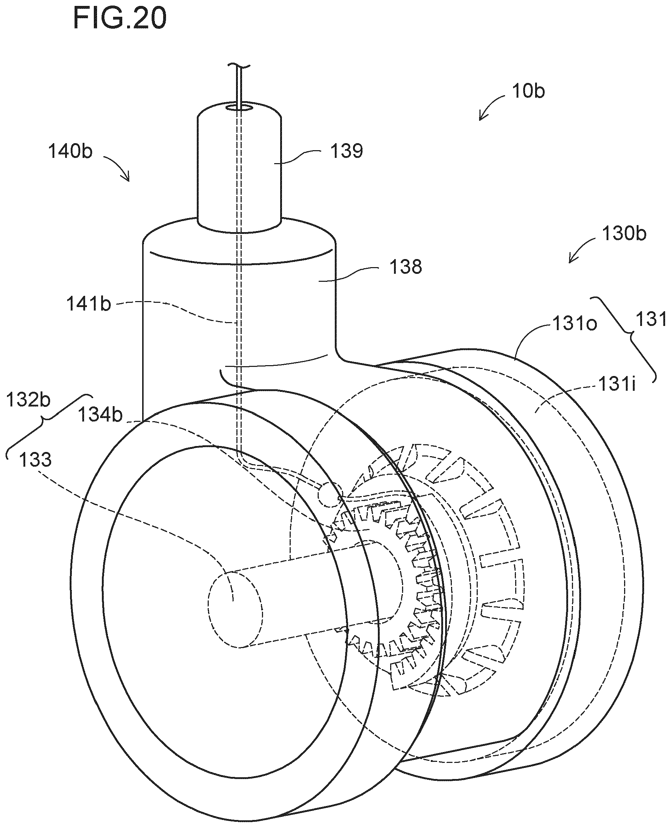

FIGS. 20 to 22 are perspective views of the detailed configuration of a wheel lock system 10b (the caster part 130b and the lock mechanism 140b) in a third embodiment. Hereinafter, the description of any component that is the same as that of the wheel lock system 10 of the above-mentioned first embodiment among the components of the wheel lock system 10b of the third embodiment is omitted as appropriate by marking it with the same symbol.

As similar to the first embodiment, the caster part 130b in the third embodiment includes the body 138, the two wheels 131, and a shaft member 132b. The shaft member 132b includes: a center shaft member 133 having a substantially columnar shape; and a substantially hollow-cylindrical outer peripheral shaft member 134b arranged so as to cover a part of the outer peripheral surface of the center shaft member 133. The outer peripheral surface of the outer peripheral shaft member 134b is formed with a plurality of recesses 135b. In the third embodiment, a plurality of teeth are formed over the entire outer peripheral surface of the outer peripheral shaft member 134b, and as a result, a plurality of recesses 135b are formed over the entire outer peripheral surface of the outer peripheral shaft member 134b.

The lock mechanism 140b in the third embodiment includes a linear body 141b. In the third embodiment, the linear body 141b includes the core wire 142 and a rack member 148 joined to the core wire 142. One side surface of the rack member 148 is formed with a plurality of teeth 149 that mesh with the outer peripheral surface of the outer peripheral shaft member 134b. That is, the teeth 149 of the rack member 148 function as protrusions capable of fitting respectively into the recesses 135b formed on the outer peripheral surface of the outer peripheral shaft member 134b.

The distal end portion (the portion arranged with the rack member 148) of the linear body 141b is arranged on the outer peripheral surface of the outer peripheral shaft member 134b to face the outer peripheral surface of the outer peripheral shaft member 134b so as to be able to press the one side surface of the rack member 148. That is, the rack member 148 has flexibility, and is configured such that, when a tensile force is not applied to the core wire 142, the rack member 148 is separated from the outer peripheral surface of the outer peripheral shaft member 134b, and on the other hand, when a tensile force is applied to the core wire 142, the rack member 148 elastically deforms so that the teeth 149 of the rack member 148 and the recesses 135b of the outer peripheral shaft member 134 fit together. Since the rack member 148 has flexibility, the tooth shape of the teeth 149 of the rack member 148 and the positional relationship among the plurality of teeth 149 may vary according to the deformation of the rack member 148. Therefore, in the present embodiment, the tooth shape of the outer peripheral surface of the outer peripheral shaft member 134b is not a general tooth shape using an involute curve but is a tooth shape designed according to the teeth 149 after deformation of the rack member 148. A curved section may be provided in the tooth 149 of the rack member 148 or in a corner portion of the tooth of the outer peripheral surface of the outer peripheral shaft member 134b.

The lock mechanism 140b is configured to switch between a state (unlocked state), where the teeth 149 of the rack member 148 functioning as the protrusion of the linear body 141b are not fitted into the recesses 135b formed on the outer peripheral surface of the outer peripheral shaft member 134b of the shaft member 132b, that is, a state where rotation of the shaft member 132b (and the wheel 131 fixed to the shaft member 132b) is permitted, and a state (locked state), where the teeth 149 of the rack member 148 functioning as the protrusion of the linear body 141b are fitted into the recesses 135b, that is, a state where rotation of the shaft member 132b (the wheel 131 fixed to the shaft member 132b) is restricted by the linear body 141b.

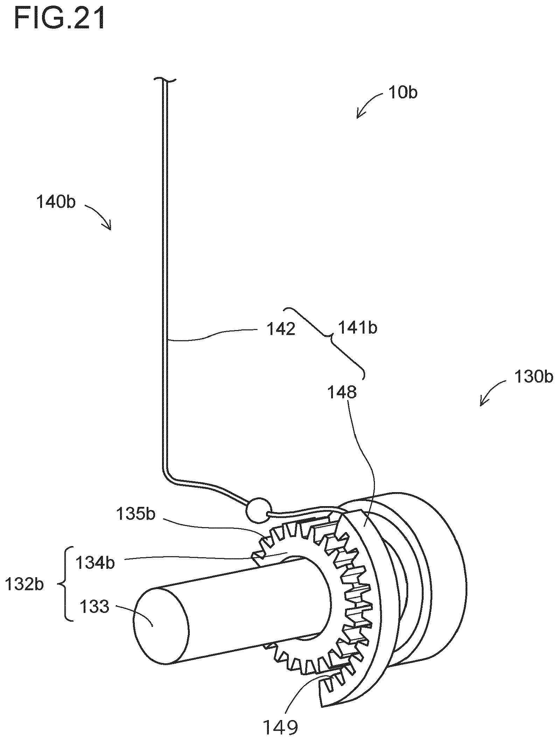

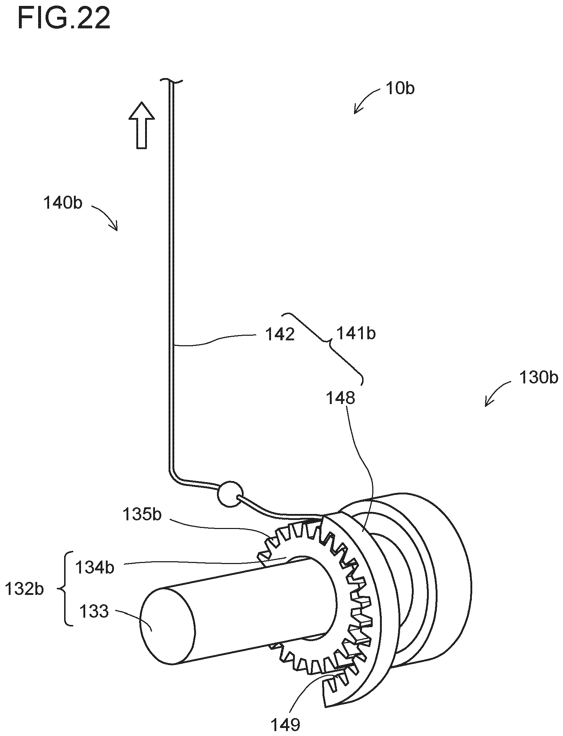

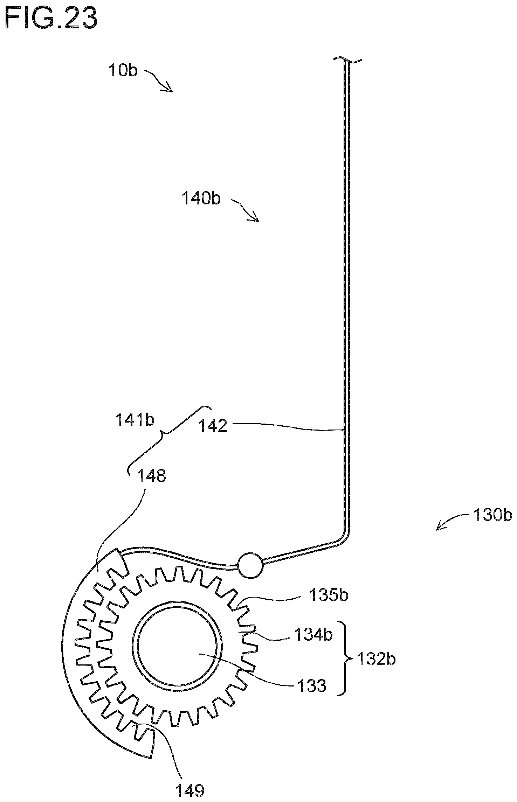

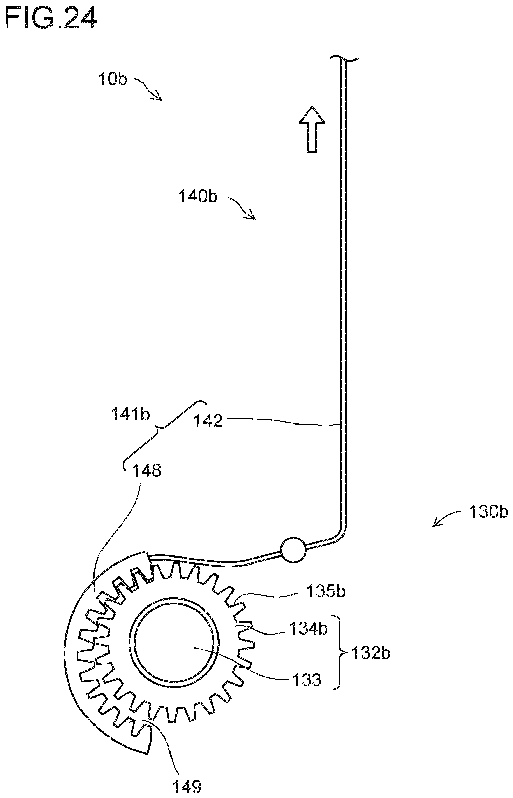

FIG. 23 is a side view showing the configuration of a part of the wheel lock system 10b in the unlocked state in the third embodiment. FIG. 24 is a side view showing the configuration of a part of the wheel lock system 10b in the locked state in the third embodiment. In the unlocked state (FIGS. 21 and 23), when the core wire 142 forming the linear body 141b receives a tensile load according to the operation of the operation part 126 as similar to the first embodiment, as shown in FIGS. 22 and 24, the distal end portion (the portion arranged with the rack member 148) of the linear body 141b approaches the outer peripheral surface of the outer peripheral shaft member 134b of the shaft member 132b by elastically deforming. As a result, the outer teeth 149 of the rack member 148 as the protrusions fit into the recesses 135 formed on the outer peripheral surface of the outer peripheral shaft member 134b so as to establish the locked state. That is, the lock mechanism 140b is configured to change from the unlocked state, where the protrusions (teeth 149 of the rack member 148) are not fitted into the recess 135b to the locked state, when the protrusions (teeth 149 of the rack member 148) fit into the recesses 135b, along with the movement of the linear body 141b in a direction (the inward direction of the plane of paper of FIGS. 23 and 24) orthogonal to the rotation axis of the shaft member 132b. The movement direction of the linear body 141b at this time approximately coincides with the tangent direction of the outer peripheral surface of the outer peripheral shaft member 134b.

On the other hand, in the locked state (FIGS. 22 and 24), when the core wire 142 forming the linear body 141b does not anymore receive a tensile load according to the operation of the operation part 126 as similar to the first embodiment, as shown in FIGS. 21 and 23, the distal end portion (the portion arranged with the rack member 148) of the linear body 141b is separated from the outer peripheral surface of the outer peripheral shaft member 134b of the shaft member 132b by deforming so as to return to the initial state. As a result, the unlocked state is established, where the teeth 149 of the rack member 148 as the protrusions are not fitted into the recesses 135b formed on the outer peripheral surface of the outer peripheral shaft member 134b. That is, the lock mechanism 140b is configured to change from the locked state, where the protrusions (teeth 149 of the rack member 148) are fitted to the recesses 135b, to the unlocked state, when the protrusions (teeth 149 of the rack member 148) are released from fitting into the recesses 135b, along with the movement of the linear body 141b in a direction (the inward direction of the plane of paper of FIGS. 23 and 24) orthogonal to the rotation axis of the shaft member 132b.

As described above, as similar to the wheel lock system 10 of the first embodiment, in the wheel lock system 10b of the third embodiment, the lock mechanism 140b is configured to change from the unlocked state, where the protrusions (teeth 149 of the rack member 148) are not fitted into the recesses 135b, to the locked state, when the protrusions (teeth 149 of the rack member 148) fits into the recesses 135b, along with the movement of the linear body 141b in a direction orthogonal to the rotation axis of the shaft member 132b. Therefore, it is possible to reduce the possibility of fixation of the protrusions (teeth 149 of the rack member 148) to the recesses 135b and to avoid occurrence of a failure in unlocking. It is possible to make small the moving distance of the protrusions (teeth 149 of the rack member 148) when the wheel 131 is locked and the force required for unlocking the wheel 131, and to make short the time required for unlocking the wheel 131.

In the wheel lock system 10b of the third embodiment, the linear body 141b of the lock mechanism 140b includes the core wire 142, and the rack member 148 joined to the end portion of the core wire 142 and formed with the plurality of teeth 149 functioning as the protrusions. Therefore, the wheel lock system 10b with a comparatively simple configuration can achieve locking/unlocking of the wheel 131 by fitting/disengaging of the protrusions (teeth 149 of the rack member 148) and the recesses 135a, and facilitation of manufacturing and improvement in durability of the wheel lock system 10b.

In the wheel lock system 10b, the plurality of recesses 135b are formed in at least a part of the outer peripheral surface of the shaft member 132b, and the linear body 141b includes the plurality of protrusions (teeth 149 of the rack member 148) capable of fitting respectively into the plurality of the recesses 135b, and accordingly, further reliable locking of the wheel 131 can be achieved.

### D. Modification example

The technology disclosed herein is not limited to the above-mentioned embodiments, and can be modified in various forms without departing from the gist thereof. For example, the following modification examples are also possible.

The configuration of the suitcase 100 and the configuration of the wheel lock system 10 included in the suitcase 100 in the embodiments described above are merely an example and various modifications thereof may be performed. For example, in the embodiments described above, four caster parts 130 are attached to the suitcase 100, but the number of caster parts 130 attached to the suitcase 100 may be three or less or five or more. In the embodiments described above, each caster part 130 includes two wheels 131. However, the number of wheels 131 included in each caster part 130 may be one, or three or more.

In the embodiments described above, the operation part 126 is installed in the handle part 120. However, the operation part 126 may be installed at other positions. The installation position of the linear body 141 (core wire 142) included in the lock mechanism 140 may vary according to the installation position of the operation part 126.

In the first embodiment described above, the linear body 141 includes the core wire 142, and the outer peripheral wire 143 spirally wound around the outer periphery of the core wire 142. However, the linear body 141 may include the core wire 142, and one or a plurality of outer peripheral wires wound around the outer periphery of the core wire 142 in a manner other than the spiral manner.

The modification example (FIG. 13) of the first embodiment has a configuration in which, even in the locked state of the wheel 131 by the lock mechanism 140, while rotation of the wheel 131 in one rotation direction is restricted, rotation of the wheel 131 in the other direction can be permitted. However, the configuration may be utilized alone independently from the lock mechanism 140. That is, in the modification example, the state is fixed to the locked state of the wheel 131 (there is no configuration of switching to the unlocked state), and the configuration may be utilized alone as a configuration capable of permitting rotation of the wheel 131 in the other rotation direction while regulating rotation of the wheel 131 in one rotation direction.

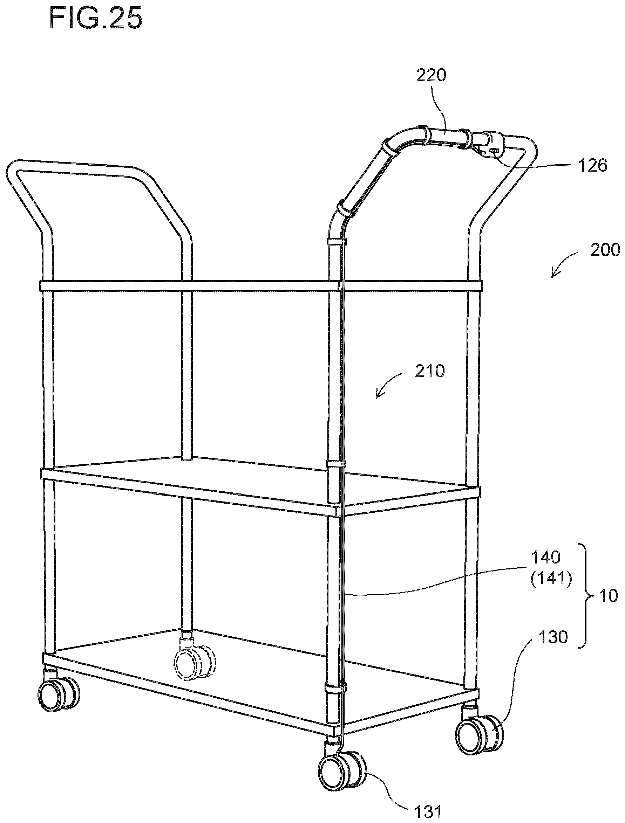

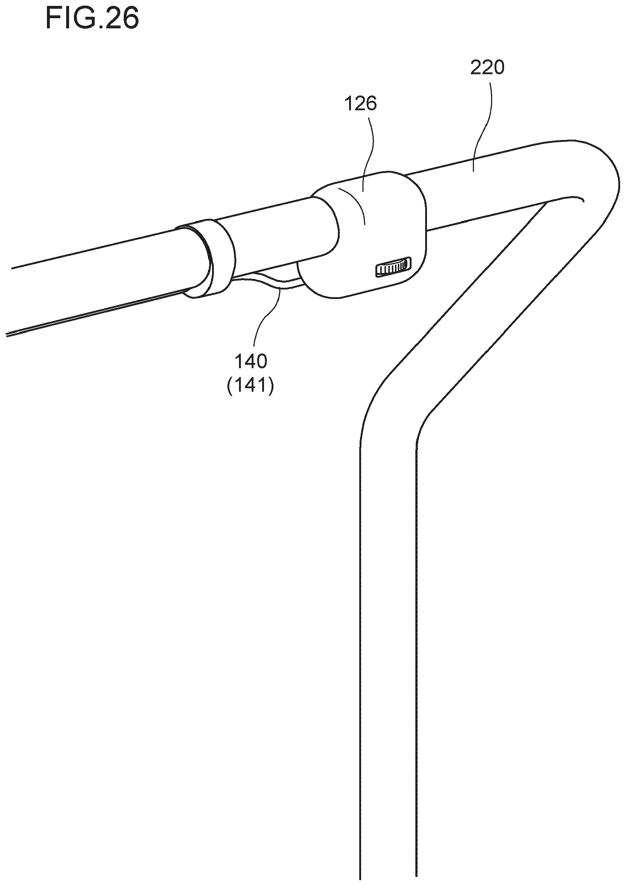

In the embodiment described above, an example has been described where the wheel lock system 10 is applied to the suitcase 100. However, the wheel lock system 10 disclosed herein may be applied to other carriers. FIG. 25 is a diagram that shows the configuration of a trolley 200 to which the wheel lock system 10 disclosed herein is applied. The trolley 200 is a carrier carried along a floor surface and includes a main body part 210, a handle part 220, a wheel lock system 10 (a caster part 130 and a lock mechanism 140). The configuration of the wheel lock system 10 provided in the trolley 200 is similar to the configuration of the wheel lock system 10 in the embodiments described above. As shown in FIG. 26, the handle part 220 of the trolley 200 is attached with an operation part 126 having a configuration similar to that of the embodiments described above.

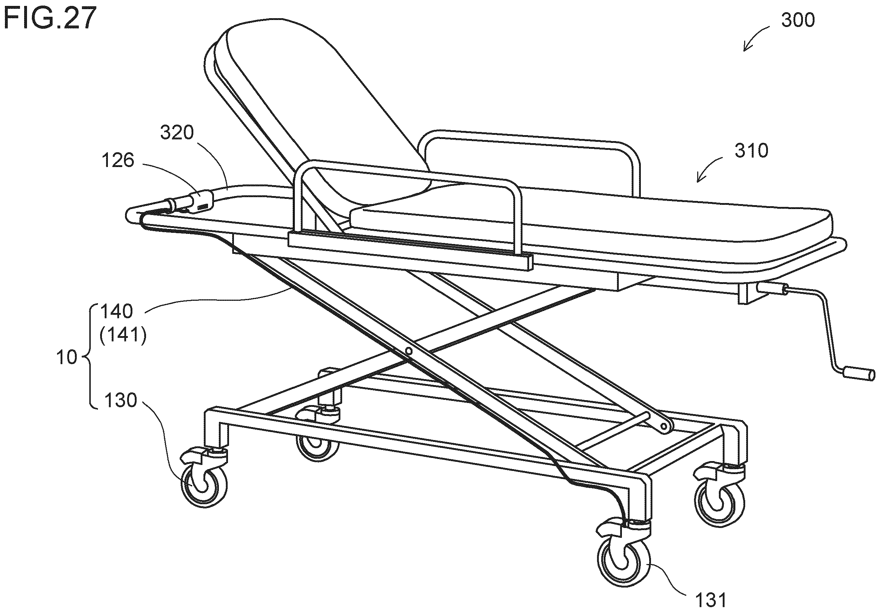

FIG. 27 is a diagram that shows the configuration of a stretcher 300 to which the wheel lock system 10 disclosed in the present specification is applied. The stretcher 300 is a carrier carried along a floor surface and includes a main body part 310, a handle part 320, a wheel lock system 10 (a caster part 130 and a lock mechanism 140). The configuration of the wheel lock system 10 provided in the stretcher 300 is similar to the configuration of the wheel lock system 10 in the embodiments described above. The handle part 320 of the stretcher 300 is attached with the operation part 126 having a configuration similar to that of the embodiments described above.

### REFERENCE SIGNS LIST

- 10:: Wheel lock system
- 21:: Housing
- 21X, 21Y:: Protrusion portion
- 22:: Lid body
- 23:: Dial
- 23X, 23Y:: Hole
- 24:: Pinion
- 25:: Rack
- 26:: Positioning member
- 34:: Second outer peripheral shaft member
- 100:: Suitcase
- 110:: Body part
- 120:: Handle part
- 122:: Grip part
- 122L:: Lower grip part
- 122U:: Upper grip part
- 124:: Pole part
- 126:: Operation part
- 130:: Caster part
- 131:: Wheel
- 131i:: Inside wheel
- 131o:: Outside wheel
- 132:: Shaft member
- 133:: Center shaft member
- 134:: Outer peripheral shaft member
- 135:: Recess
- 138:: Body
- 139:: Spindle
- 140:: Lock mechanism
- 141:: Linear body
- 142:: Core wire
- 143:: Outer peripheral wire
- 144:: Force member
- 145:: Locking member
- 146:: Spherical body
- 148:: Rack member
- 149:: Tooth
- 200:: Trolley
- 210:: Main body part
- 220:: Handle part
- 300:: Stretcher
- 310:: Main body part
- 320:: Handle part

## Claims

1. A wheel lock system comprising:
a body;
a shaft member supported by the body so as to be rotatable around a rotation axis and having a recess formed in at least a part of an outer peripheral surface around the rotation axis;
a wheel fixed to the shaft member to rotate together with the shaft member; and
a lock mechanism that switches between an unlocked state and a locked state, the unlocked state permitting rotation of the wheel and the locked state restricting rotation of the wheel,
wherein the lock mechanism includes a linear body having a protrusion, the linear body is arranged in the outer peripheral surface formed with the recess of the shaft member, so as to be able to press the protrusion, and
wherein the lock mechanism is configured to change from the unlocked state, where the protrusion is not fitted into the recess to the locked state, when the protrusion fits into the recess along with the movement of the linear body in a direction orthogonal to the rotation axis of the shaft member.

2. The wheel lock system according to claim 1, wherein the lock mechanism is configured to change from the locked state, where the protrusion is fitted into the recess to the unlocked state, when the protrusion is released from fitting into the recess along with the movement of the linear body in a direction orthogonal to the rotation axis of the shaft member.

3. The wheel lock system according to claim 1 or 2, wherein a plurality of the recesses are formed in at least a part of the outer peripheral surface of the shaft member, and the linear body includes a plurality of the protrusions capable of fitting into the plurality of the recesses, respectively.

4. The wheel lock system according to any one of claims 1 to 3, wherein the linear body includes:
a core wire and
an outer peripheral wire wound around an outer periphery of the core wire and functioning as the protrusion.

5. The wheel lock system according to claim 4, wherein the outer peripheral wire is spirally wound around the outer periphery of the core wire.

6. The wheel lock system according to any one of claims 1 to 3, wherein the linear body includes:
a core wire and
a spherical body formed on the core wire and functioning as the protrusion.

7. The wheel lock system according to any one of claims 1 to 3, wherein the linear body includes:
a core wire and
a rack member joined to an end portion of the core wire and having a plurality of teeth functioning as the protrusion.

8. A carrier comprising:
the wheel lock system according to any one of claims 1 to 7; and
a main body part attached with the body of the wheel lock system to a bottom portion of the main body part.
